# EUROPEAN PATENT SPECIFICATION

(11) **EP 3 142 237 B1**
(45) Date of publication and mention of the grant of the patent: **03.08.2022**
(21) Application number: 16167854.5
(22) Date of filing: 02.05.2016
(51) Int. Cl.: H02M 1/15, H02M 1/14

(54) **SERIES ACTIVE RIPPLE FILTER**
SERIELL WIRKENDER AKTIVER WELLIGKEITSFILTER
FILTRE D'ONDULATION ACTIVE AGISSANT EN SÉRIE

(30) Priority: 05.05.2015 US 201514704591
(43) Date of publication of application: 15.03.2017
(73) Proprietor: Schneider Electric IT Corporation, Foxboro, MA 02035 (US)
(72) Inventor: GHOSH, Rajesh, 560 054 Bangalore (IN); DIGHRASKER, Milind, 560032 Bangalore (IN); LIPARE, Mahendrakumar H., 560092 Bangalore (IN); KLIKIC, Damir, Waltham, Massachusetts 02452 (US)
(74) Representative: Murgitroyd & Company

(56) References cited:
- WO-A1-2013/004019
- US-A1- 2014 369 090

## Description

### 1. Field of Invention

The present disclosure relates generally to power systems, and in particular to power conversion devices.

### 2. Discussion of Related Art

Power conversion devices include devices for AC-to-DC power conversion, such as rectifiers, and DC-to-AC power conversion, such as inverters. Power conversion devices are often used in uninterruptible power supplies (UPS) to provide regulated, uninterrupted power for sensitive and/or critical loads, such as computer systems and other data processing systems. Known uninterruptible power supplies include on-line UPS's, off-line UPS's, line interactive UPS's as well as others. It is well known that single phase PWM (pulse width modulation) rectifiers experience a second-order harmonic current and corresponding voltage ripple on the DC link of the rectifier. Conventionally, the low frequency harmonic current is filtered using a bulk capacitor in the DC link. A bulk capacitor is similarly required in systems including DC-to-AC inverters. Documents WO2013/004019 A1 and US2014/0369090 A1 disclose examples of power conversion systems and methods according to available prior art.

### SUMMARY OF INVENTION

The invention provides a power system according to claim 1 and a method for operating a power system according to claim 5. Preferred embodiments are defined in the dependent claims.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a schematic diagram of a power system having an active ripple filter according to aspects of the current invention;
FIG. 2 is a further schematic diagram of the power system having an active ripple filter depicted in FIG. 1 according to aspects of the current invention;
FIG. 3 is an example ripple filter control block diagram according to aspects of the current invention;
FIG. 4 is a further schematic diagram of the power system having an active ripple filter depicted in FIG. 2 according to aspects of the current invention;
FIG. 5 is a schematic diagram of a power system having an active ripple filter according to aspects of the current invention;
FIG. 6 is a schematic diagram of an uninterruptible power supply according to aspects of the current invention;
FIG. 7 is a process flow diagram for managing a voltage ripple according to aspects of the current invention; and
FIG. 8 is a process flow diagram for managing a voltage ripple according to aspects of the current invention.

### DETAILED DESCRIPTION

As discussed above, in single-phase power conversion systems there is an inherent problem of a voltage ripple on the DC link from a second-order harmonic current. Accordingly, many power conversion devices include one or more bulk capacitors coupled in the DC link to filter the harmonic current experienced by system components. For example, high and low frequency ripple can be filtered using a bulk capacitor or capacitor bank in the DC link. High capacitance requirements often require the use of bulky large electrolytic capacitors which significantly limit the lifespan of the system and negatively impact the power density of the system.

One conventional approach to attenuating the voltage ripple in single-phase PWM inverters employs a shunt active ripple filter. The shunt active ripple filter operates as a current sink/source to steer the low frequency ripple current generated by the inverter into a local electrolytic capacitor. In other conventional approaches, a DC-to-DC boost converter is employed between the DC source and inverter. The boost converter isolates the inverter from the DC source by drawing current from the source. Accordingly, a local capacitor can support the low frequency ripple generated by the inverter. In other conventional approaches, passive filters, such as second harmonic LC traps may be used to sink the reactive current of the source and reduce or eliminate bulk capacitor requirements. These conventional approaches all have disadvantages. For example, shunt active ripple filters typically require high-voltage devices in the ripple filter, which result in higher conduction and switching losses. This reduces the efficiency of the conversion system. Similarly, DC-to-DC boost converters typically require two stage power conversion with full power processing, which has a noticeable negative impact on system efficiency.

At least some aspects disclosed herein provide an active ripple filter for incorporation in a single-phase AC-to-DC and/or DC-to-AC PWM power conversion system. Various embodiments of the active ripple filter require less capacitance than typical approaches while maintaining high power conversion efficiency. As such, the ripple filter circuits discussed herein permit a kW-scale power conversion system with compact dimensions. In particular, various examples exhibit a high power density, low reactive power processing, and high efficiency, while including simple and easily adjustable controls. In one example, a power system includes an active ripple filter having a voltage source interposed between a DC source and a power inverter. The active ripple filter may include a low-voltage full-bridge inverter and coupled capacitor. By controlling the active ripple filter to generate an output voltage that is opposite in phase with the voltage ripple across a DC link capacitor in a DC link of the power system, the ripple current from power converter can be directed to the DC link capacitor to cancel the voltage ripple. Similarly, in various other embodiments, a power system includes an active ripple filter including a voltage source interposed between a DC load and a PWM rectifier. The active ripple filter may include a low-voltage full-bridge inverter and a coupled capacitor. The output of the active ripple filter is controlled such that the output voltage is opposite in phase with the voltage ripple across the DC link capacitor to cancel the ripple current and smooth DC power is delivered to the DC load.

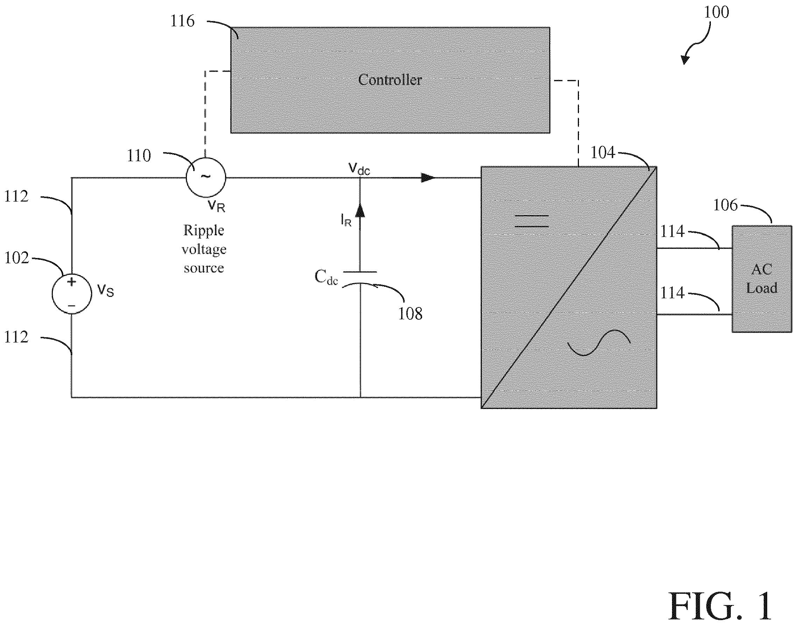

FIG. 1 shows a power system having an active ripple filter according to various embodiments discussed herein. As shown, the power system 100 includes an input 112, a DC source 102, an output 114, an AC load 106, a DC link having at least one DC link capacitor 108, an power converter (e.g., inverter 104), an active ripple filter 110, and a controller 116 coupled to the active ripple filter 110 and the inverter 104 . As shown in FIG. 1, the input 112 is coupled to the DC source 102 and configured to receive input DC power from the DC source 102. The output is coupled to the AC load 106 and is configured to provide AC power to the AC load 106. In various embodiments, the inverter 104 operates to generate AC power having a desired frequency and magnitude and to provide the AC power to the output 114. As shown, the inverter 104 is coupled between the DC link and the output 114. While shown in FIG. 1 as including a single capacitor in the DC link, in other implementations the DC link may include a DC link capacitor bank including a plurality of capacitors. The active ripple filter 110 is interposed between the DC source 102 and the inverter 104 and connected in series with the input 112. As shown, the power system 100 may include a controller coupled and in communication with the active ripple filter 110 and inverter 104. The controller 116 may include one or more processing systems as described in further detail below.

In various implementations the active ripple filter 110 is configured to inject a cancelling ripple voltage to create a low-frequency cancelling voltage ripple across the DC link capacitor 108. By controlling the output voltage of the active ripple filter 110 such that it is opposite in phase with the voltage ripple across the DC link capacitor 108, the ripple current generated by the inverter 104 is forced to the DC link capacitor 108 and effectively managed. In operating the active ripple filter 110 as a voltage source, the voltage ripple in the power system 100 can be controlled such that the voltage ripple has minimal impact on circuit components, the load 106, and/or the source 102.

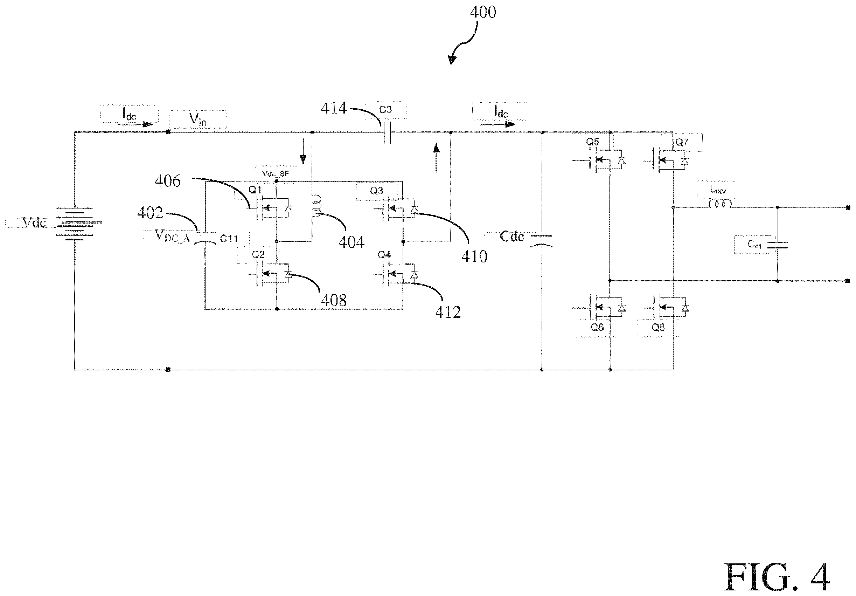

In various implementations, the active ripple filter 110 may include a low-voltage full-bridge inverter coupled to a local capacitor. The local capacitor has a rating sufficient to handle the full RMS current continuously. Furthermore, a minimum capacitance value is selected relative to a maximum allowed ripple voltage. Although shown as a single capacitive element, in various embodiments the local capacitor may include a capacitor bank. For example, in one implementation the local capacitor includes a pair of 1500µF, 25V electrolytic capacitors. Various examples of the active ripple filter 110 are discussed below with reference to FIG. 4.

The ripple current will typically include a high frequency component and a low frequency component. The inverter 104 draws a current I_{R} + I_{DC} + I_{HF} from the DC link, where I_{HF} is the switching frequency component (not shown), I_{R} is the low-frequency ripple component, and I_{DC} is the DC component. The DC link capacitor 108 ("C_{dc}") fully sinks the current component I_{R}, while the DC source 102 supplies the current component I_{DC}. The active ripple filter 110, acting as a cancelling ripple voltage source, is controlled such that it offers very high impedance to the low-frequency current component I_{R}. In one example, the voltage source injects a cancelling ripple voltage in series with the DC source 102 to create a low-frequency cancelling voltage ripple (V_{R}) across the DC link capacitor 108. By properly adjusting the phase and amplitude of the cancelling ripple voltage, the entire low-frequency current component I_{R} can be forced to the DC link capacitor 108. Similar to the local capacitor described above, the DC link capacitor 108 has a rating sufficient to handle the full RMS current continuously. Furthermore, a minimum capacitance value is selected relative to the maximum allowed ripple voltage. As described above, the voltage ripples introduces an overshoot and undershoot in the mean DC voltage. The DC link capacitor 108 is selected such that the minimum voltage does not cause inverter output voltage clamping. For example, in one implementation the DC link capacitor includes three 180µF, 450V electrolytic capacitors each having a 22mm diameter and 30mm height. As conventional power systems typically require five 470µF, 450V capacitors (each having a diameter of 35mm and a height of 35mm), various embodiments discussed herein significantly reduce the size of the power system 100. The active ripple filter 110 is connected in series with the input DC source 102 in one DC-AC converter implementation, and in series with a DC load in one AC-DC converter implementation. In both cases, the current through the active ripple filter depends on the load. Accordingly, in one example, the active ripple filter includes only a voltage mode of control and is absent a current control. It is appreciated that a voltage control greatly simplifies the control process.

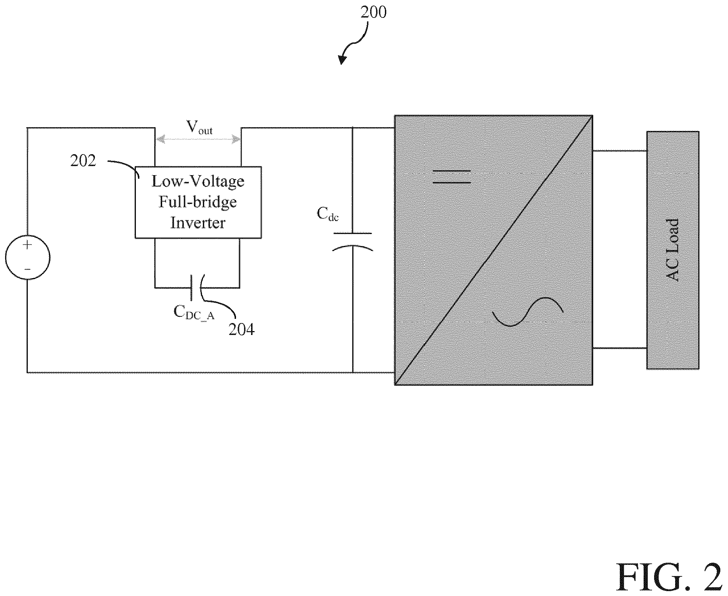

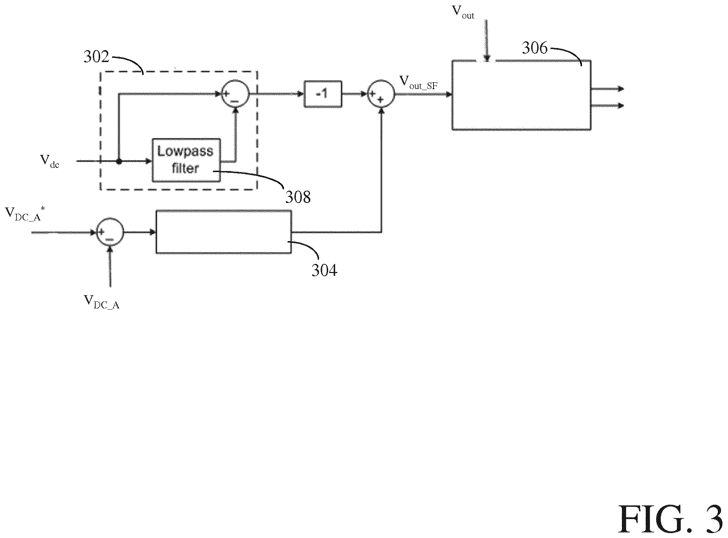

FIG. 2 shows the power system 100 including the active ripple filter 110 in greater detail, according to one embodiment. Various embodiments of the active ripple filter 110 include a low-voltage full-bridge inverter 202 and a coupled local capacitor 204. Turning briefly to FIG. 3, and with continuing reference to FIGS. 1 and 2, shown is an example ripple filter control block diagram according to at least one embodiment. A voltage ripple extractor 302 is coupled with a ripple filter local capacitor controller 304 and a ripple filter inverter controller 306. In various embodiments, the controller 116 includes the local capacitor controller 304 and ripple filter inverter controller 306. As discussed above, the DC link voltage V_{dc} includes a DC component and a second harmonic ripple component. The voltage ripple is sensed and extracted by passing the DC voltage V_{dc} through a low pass filter 308, and removing the DC component from the DC link voltage. The extracted voltage ripple is then inverted (i.e. multiplied by a value of -1) to obtain a reference voltage for generation of the cancelling ripple voltage. Accordingly, the phase of the cancelling ripple voltage may be matched to the voltage ripple. The voltage supplied by the local capacitor V_{DC_A} is controlled by the local capacitor controller 304 to correspond with the reference voltage (shown as V_{DC_A}^{∗}). In various embodiments voltage V_{DC_A} is controlled against all loading conditions. In various embodiments, the local capacitor controller 304 is configured to add a DC offset to address varying load conditions and provide the ripple filter output voltage V_{OUT_SF} to the ripple voltage inverter controller 306. The ripple filter inverter controller 306 operates the low voltage full-bridge inverter 202 to invert the ripple filter output voltage, as discussed below, to generate the cancelling ripple voltage. As shown in FIG. 1, the current through the active ripple filter 110 is DC. Accordingly, the DC offset voltage across the active ripple filter 110 determines the power intake by the active ripple filter 110. Since no load is coupled across local capacitor 204, the input power is passed to the DC link. Accordingly, by adjusting the offset voltage in the output voltage, a cancelling ripple voltage can be generated to cancel a voltage ripple.

FIG. 4 shows the power system 100 and the active ripple filter 100 in greater detail, according to one implementation. As shown in FIG. 4, the full-bridge inverter of the active ripple filter can include a first switch 406, a second switch 408, a third switch 410, a fourth switch 412, an inductor 404, and an active filter capacitor 402 (i.e., coupled local capacitor 204 shown in FIG. 2). FIG. 4 shows the power conversion system optionally including a third capacitor 414. In the steady state, the active ripple filter outputs only reactive power (i.e. DC current supplied by the DC source multiplied by the AC ripple voltage). As discussed above, in one implementation no active power is required to run the active ripple filter. However, in various implementations some active power may be required to support the self discharge of the active filter capacitor 402 ("C₁₁") included in the active ripple filter and to avoid ripple filter losses. Hence, in one example, the ripple filter DC link voltage V_{DC_A} can be maintained at a desired level to avoid all filter losses. In one example, the active ripple filter includes a series pass filter passing DC current I_{dc}. By turning on the first switch 406 ("Q₁") and the fourth switch 412 ("Q₄") for a longer duration than the second switch 408 ("Q₂") and third switch 410 ("Q₃"), the active filter capacitor 402 can be charged. The active filter capacitor 402 can also be discharged by turning on the second and third switches (switch 408 and switch 410) for a longer duration than the first and fourth switches (switch 406 and switch 412). Similarly, by simultaneously turning on either the first switch 406 and the third switch 410 or the second switch 408 and the fourth switch 412, the active filter capacitor 402 can be bypassed.

In various implementations, overvoltage situations in the active ripple filter's DC link voltage can be avoided by simultaneously turning on either the first switch 406 and the third switch 410 or the second switch 408 and the fourth switch 412. Turning on the switches in such a manner will electrically disconnect the active filter capacitor 402 from the circuit. The above strategy may be used during a power conversion system start-up, for example.

Returning to FIG. 1, in various embodiments, the power system 100 may include the controller 116 coupled with the active ripple filter 110 and inverter 104 and configured to operate the active ripple filter 110 to act as a voltage source. In particular, the controller 116 can be configured to cause the active ripple filter 110 to inject the cancelling ripple voltage to create the low-frequency cancelling voltage ripple. The controller 116 can include one or more system components that exchange information. More specifically, the controller 116 can include at least one processor, a power source, a data storage, a circuitry interface, a user interface, a memory, and one or more interconnection mechanisms. The at least one processor may be any type of processor or multiprocessor. The at least one processor is connected to the other system components, including one or more memory devices by the interconnection mechanism. The circuitry interface couples the active ripple filter 110 and the inverter 104 to the at least one processor.

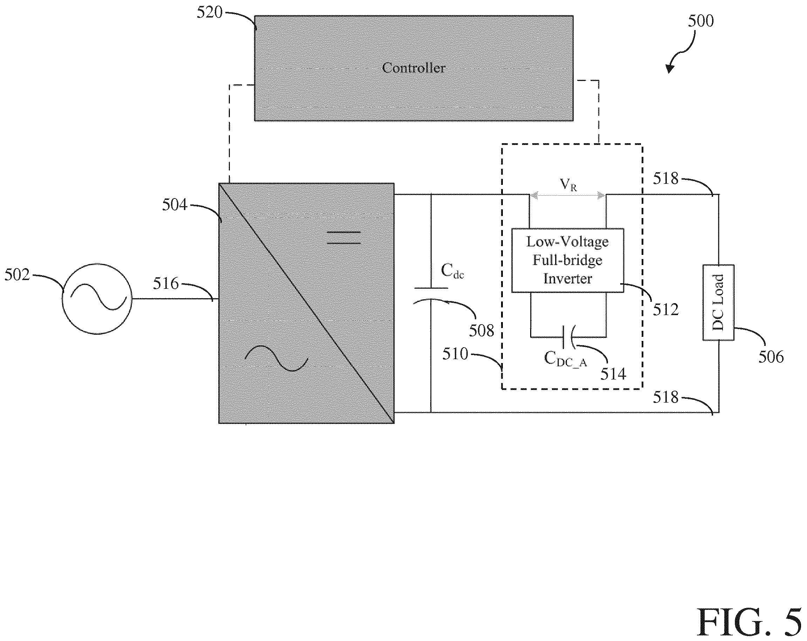

Turning now to FIG. 5, one example of an embodiment of a power system including an active ripple filter is shown. As shown, the power system 500 includes an a input 516, an AC source 502, an output 518, a DC load 506, a DC link having at least one DC link capacitor 508, a power converter (e.g., rectifier 504), an active ripple filter circuit 510, and a controller 520 coupled to the active ripple filter 510 and rectifier 504. As shown in FIG. 5, the input 516 is coupled to the rectifier 504 and configured to receive input AC power from the AC source 502. In various implementations the received AC power includes a single phase AC waveform. Further, the output 518 is coupled to the DC load 506 and configured to provide DC power to the DC load 506. In various examples, the rectifier 504 operates to convert the received AC power to DC power and deliver the DC power to the output 518. While shown in FIG. 5 as including a single capacitor in the DC link, in other implementations the DC link may include a DC link capacitor bank including a plurality of capacitors. The active ripple filter 510 is interposed between the rectifier 504 and the DC load 506 and connected in series with the DC load 506. As shown, the power system 500 shown in FIG. 5 may include the controller 520 coupled and in communication with the active ripple filter 510 and the rectifier 504. The controller 520 may include the controller 116 discussed above with reference to FIG. 1.

Without the use of the active ripple filter 510, the rectifier 504 would generate a residual periodic variation (ripple) of the output DC current derived from the AC input as a result of incomplete suppression of the AC input waveform. In various implementations, the active ripple filter 510 is configured to inject a cancelling ripple voltage to create a low-frequency cancelling voltage ripple across the DC link capacitor 508. By controlling the output voltage of the active ripple filter 510 such that it is opposite in phase with the voltage ripple across the DC link capacitor 508 from the rectifier 504, the ripple current generated by the rectifier 504 is forced to the DC link capacitor 508 and the ripple voltage is effectively cancelled. Accordingly, smooth DC power is provided from the output to the DC load 506. In operating the active ripple filter 510 as a voltage source, the voltage ripple in the power system 500 can be efficiently managed to have a minimal impact circuit components and the DC load 506. In various implementations, the active ripple filter 510 may include a low-voltage full-bridge inverter 512 coupled to a local capacitor 514. Various examples of the active ripple filter 510 are discussed above with reference to FIG. 4.

As understood, the ripple current at the output of the rectifier 504 will include a high frequency component, a DC component, and a low frequency component. The DC link capacitor 508 fully sinks the low frequency and high frequency ripple components, while the load receives the DC current component from the rectifier 504. The active ripple filter 510, acting as a ripple voltage source, is controlled such that it offers very high impedance to the low-frequency current component. In one embodiment, the active ripple filter injects the cancelling ripple voltage in series with the DC load 506 to create a low-frequency cancelling voltage ripple (V_{R}) across the DC link capacitor 508. By properly adjusting the phase and amplitude of the cancelling ripple voltage, the entire low-frequency current component can be forced to the DC link capacitor 508. In various embodiments, the current through active ripple filter 510 depends on the load. Accordingly, in one example, the active ripple filter includes only a voltage mode of control and is absent a current control. It is appreciated that a voltage control greatly simplifies the control process. Various embodiments of the power system 100 may include control circuitry as described above with reference to FIG. 3. In various embodiments, the controller 520 is configured to sense and extract the voltage ripple and cause the active ripple filter 510 to generate the cancelling ripple voltage.

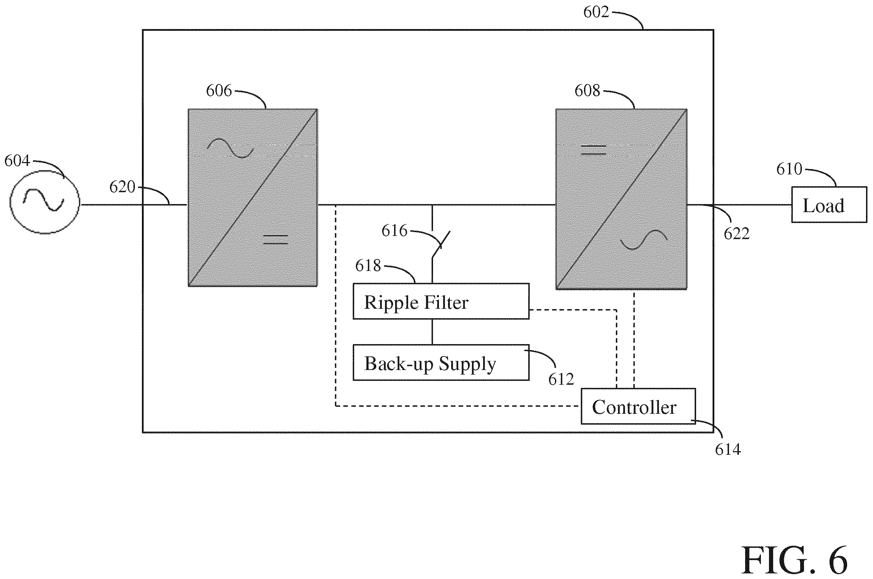

Another embodiment, which will now be described with reference to FIG. 6, is directed to an online UPS 602 having one or more of the active ripple filters as discussed above. The UPS 602 provides regulated power to a load 610 from either an AC power source 604 or a back-up power source 612, such as a battery. The UPS 602 includes a rectifier 606, an inverter 608, an active ripple filter 618, a relay 616, and a controller 614 for controlling the rectifier 606, inverter 608, relay 616, and active ripple filter 618. The UPS 602 has an input 620 coupled to the AC power source 604 and an output 622 coupled to the load 610.

During line mode of operation and under control of the controller 614, the rectifier 606 converts the input AC voltage into a DC voltage at the DC bus. For example, the DC bus may be rated up +/-500 VDC. In backup mode of operation (optionally called battery mode of operation), upon loss of input AC power, the relay 616 is activated and the UPS 602 generates a DC voltage from the back-up supply 612 (e.g., battery). While not shown, in various embodiments the back-up supply may be charged during line mode of operation. In line mode, the inverter 608 receives the DC voltage from the rectifier 606, whereas, during backup mode of operation the inverter 608 receives a DC voltage from the back-up power supply 612. The inverter 608 converts the DC voltage into an output AC voltage and delivers the AC output to the load 610. The inverter 608 may include the inverter 104, as described above with reference to FIG. 1. In various embodiments, the relay 616 is controlled by the controller 614, for example, to alternate between line mode and backup mode of operation.

As described above, various embodiments of the UPS 602 shown in FIG. 6 may include an active ripple filter 618, such as the active ripple filter 110 discussed above. In various embodiments, the active ripple filter 618 is coupled in series with the back-up supply 612, as shown. While not shown, the UPS 602 can further include a DC link capacitor coupled to the ripple filter 618. In such an embodiment, the active ripple filter 618 is configured to inject a cancelling ripple voltage to create a low-frequency cancelling voltage ripple across the DC link capacitor and cancel any negative effects of a voltage ripple in the UPS 602. By controlling the output voltage of the active ripple filter 618 such that it is opposite in phase with the voltage ripple in the UPS 602, the ripple current in the DC input current may be forced to the DC link capacitor and can be effectively controlled. In operating the active ripple filter 618 as a voltage source, the voltage ripple in the power conversion system can be efficiently managed having minimal impact on the UPS 602. In various implementations, the active ripple filter 618 may include a low-voltage full-bridge inverter coupled to a local capacitor. Various examples of the active ripple filter 618 are discussed above with reference to FIG. 4.

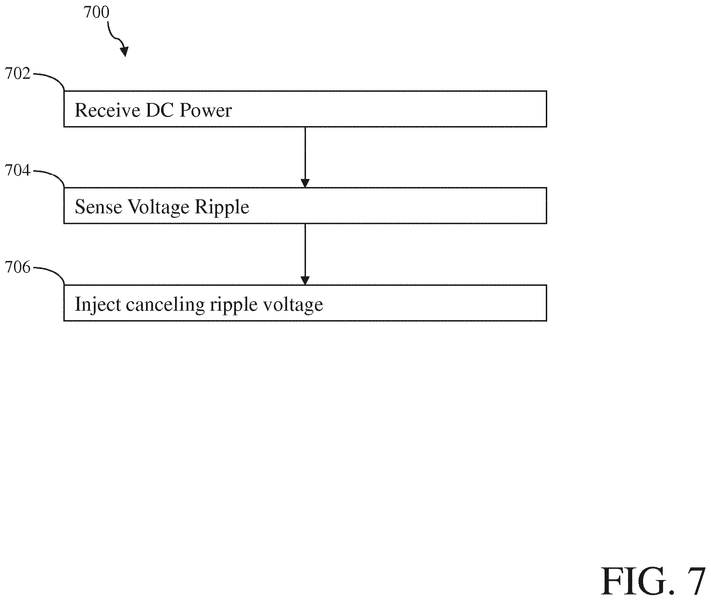

As described above with reference to at least FIG. 1, several embodiments perform processes that reduce and control a voltage ripple in power conversion systems. In some embodiments, these processes are executed by an active ripple filter, such as the active ripple filter 110 described above with reference to FIG. 1. One example of such a process is illustrated in FIG. 7. The process 700 may include a method for operating a power system having an input coupled to a DC source, an output coupled to at least one AC load, a DC link having a DC link capacitor, a power converter (e.g., inverter) coupled between the DC link and the output, and the active ripple filter connected in series with the input. According to this example, the process 700 can include the acts of receiving DC power from the DC source at the input, sensing a voltage ripple generated by the inverter, and injecting a cancelling ripple voltage at the active ripple filter to create a low-frequency cancelling voltage ripple across the DC link capacitor to force a ripple current generated by the inverter to the DC link capacitor and substantially cancel the voltage ripple.

In act 702, the input is coupled to the DC source and receives DC power from the DC source. In act 704, the active ripple filter senses a voltage ripple generated by the inverter. In various embodiments, sensing a voltage ripple includes detecting a phase of the voltage ripple. For example, sensing the voltage ripple may include extracting the voltage ripple from the voltage across the DC link voltage (V_{dc}). The voltage is passed through a low pass filter to remove the DC component from the voltage and extract the voltage ripple. The extracted voltage ripple is inverted to generate a reference voltage for generation of the cancelling ripple voltage. The voltage supplied by the local capacitor is controlled to correspond with the reference voltage. In various embodiments this supplied voltage is controlled against all loading conditions. In various embodiments, a DC offset may be used to address varying load conditions. The ripple filter output voltage is inverted to generate the cancelling ripple voltage. As discussed above, the current through the active ripple filter is DC. Accordingly, the DC offset voltage across the active ripple filter determines the power intake by the active ripple filter. Since no load is coupled across local capacitor, the input power is passed to the DC link. Accordingly, by adjusting the offset voltage in the output voltage, a cancelling ripple voltage can be generated to cancel the voltage ripple.

In act 706, the active ripple filter injects the cancelling ripple voltage to create a low-frequency cancelling voltage ripple across the DC link capacitor to force a ripple current generated by the inverter to the DC link capacitor and substantially cancel the voltage ripple. By controlling the output voltage of the active ripple filter such that it is opposite in phase with the voltage ripple across the DC link capacitor, the ripple current is forced to the DC link capacitor and effectively managed. As discussed above, the DC link capacitor fully sinks the ripple current component, while the DC source supplies the DC current component to the inverter. In various embodiments, the ripple voltage source is controlled such that it offers very high impedance to the low-frequency ripple current component and passes the DC current component. By properly adjusting the phase and amplitude of the cancelling ripple voltage, the entire low-frequency ripple current component can be forced to the DC link capacitor.

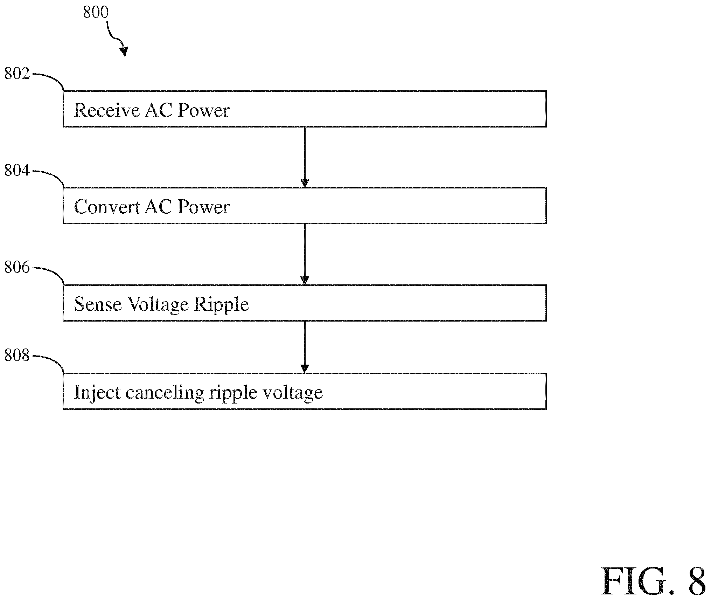

As described above with reference to at least FIG. 5, additional embodiments perform processes that reduce and control a voltage ripple in power conversion systems including an AC input. In some embodiments, these processes are executed by an active ripple filter, such as the active ripple filter 510 described above with reference to FIG. 5. One example of such a process is illustrated in FIG. 8. The process 800 may include a method for operating a power system having an input coupled to an AC source, an output coupled to at least one DC load, a DC link having a DC link capacitor, a power converter (e.g., rectifier) coupled between the DC link and the DC load, and an active ripple filter circuit connected in series with the output. According to one example, the process 800 includes acts of receiving AC power from the AC source at the input, converting AC power to DC power at the rectifier, sensing a voltage ripple in the DC power generated by the rectifier, and injecting a cancelling ripple voltage at the active ripple filter to create a low-frequency cancelling voltage ripple across the DC link capacitor to force a ripple current of the rectifier to the DC link capacitor and substantially cancel the voltage ripple.

In act 802, the input is coupled to the AC source and receives AC power from the AC source. In act 804, the rectifier receives the AC power from the input and converts the AC power to DC power. As discussed above, the rectifier may include a single phase PWM rectifier and include a plurality of semiconductor switches, or any other components suitable for rectification of the AC power. In act 806, the active ripple filter senses a voltage ripple in the DC power provided by the rectifier. As discussed above, the ripple includes any unwanted periodic variation of the DC current resulting from the incomplete suppression of the AC waveform during the rectification process performed by the rectifier. In various embodiments, sensing a voltage ripple in the DC power includes detecting a phase and extracting the voltage ripple from a voltage provided the rectifier. Various embodiments of act 806 are described above with reference to act 706 of FIG. 7.

In act 808, the active ripple filter injects a cancelling ripple voltage to create a low-frequency cancelling voltage ripple across the DC link capacitor to force the ripple current of the power provided by the rectifier to the DC link capacitor and substantially cancel the voltage ripple. By controlling the output voltage of the active ripple filter such that it is opposite in phase with the voltage ripple across the DC link capacitor, the ripple current generated by the rectifier is forced to the DC link capacitor and effectively managed. As discussed above with reference to act 706 of FIG. 7, the DC link capacitor fully sinks the ripple current component, while the rectifier supplies the DC current component to the load. In various embodiments, the active ripple filter is controlled such that it offers very high impedance to the low-frequency ripple current component and passes the DC current component. By properly adjusting the phase and amplitude of the cancelling ripple voltage, the entire low-frequency ripple current component can be forced to the DC link capacitor.

In at least some embodiments described above, a power system having an active ripple filter is described. While primarily described in the context of a single phase system, in other embodiments the power system may include a multi-phase system, such as a three phase system. Furthermore, various embodiments may include any combination of inputs and outputs while only discussed and shown herein as including a single input and single output. In other embodiments, active ripple filtering components and associated methods may be used in other types of UPS's and in other types of power devices that experience a voltage ripple.

Various aspects and functions described herein in accord with the present disclosure may be implemented as hardware, software, firmware or any combination thereof. Aspects in accord with the present disclosure may be implemented within methods, acts, systems, system elements and components using a variety of hardware, software or firmware configurations. Furthermore, aspects in accord with the present disclosure may be implemented as specially programmed hardware and/or software.

## Claims

1. A power system comprising:
an input (112) configured to be coupled to a power source and to receive input power from the power source;
an output (114) configured to be coupled to a load and to provide output power to the load;
a power converter coupled between the input and the output; and
an active ripple filter (110), coupled to one of the output and the input, including a DC link having at least one DC link capacitor (108) and configured to generate a cancelling ripple voltage to cancel a ripple current associated with the power converter, the cancelling ripple voltage being opposite in phase with a voltage ripple from the power converter,
**characterised in that**
the active ripple filter includes full-bridge inverter, a local capacitor coupled across switches of the full-bridge inverter, and an additional capacitor coupled in parallel with the full-bridge inverter wherein an arrangement of the full-bridge inverter and the additional capacitor is connected in series with the input or with the output.

2. The power system of claim 1, wherein the power converter includes an inverter and the power source includes a DC power source.

3. The power system of claim 1, wherein the power converter includes a rectifier and the power source includes an AC power source.

4. The power system of claim 1, further comprising a controller coupled to at least the active ripple filter and configured to cause the active ripple filter to generate the cancelling ripple voltage.

5. A method for operating a power system having an input (112) coupled to a power source, an output (114) coupled to at least one load, an active ripple filter (110), and a power converter coupled between the input and the output, wherein the method comprises:
receiving power from the power source at the input;
sensing a voltage ripple generated by the power converter; and
generating a cancelling ripple voltage at the active ripple filter having a phase opposite to a phase of the voltage ripple generated by the power converter to cancel the voltage ripple generated by the power converter, wherein generating the cancelling ripple voltage includes controlling a voltage from a local capacitor coupled across switches of a full-bridge inverter of the active ripple filter and providing a ripple filter output voltage based on the voltage ripple, and operating the full-bridge inverter to provide the cancelling ripple voltage based on the ripple filter output voltage, the active ripple filter including an additional capacitor coupled in parallel with the full-bridge inverter, wherein an arrangement of the full-bridge inverter and the additional capacitor is connected in series with the input or with the output.

6. The method according to claim 5, wherein sensing a voltage ripple includes extracting the voltage ripple from a voltage provided by the power converter.

## Patentansprüche

1. Ein Stromsystem, das Folgendes beinhaltet:
einen Eingang (112), der konfiguriert ist, um mit einer Stromquelle gekoppelt zu sein und um Eingangsstrom von der Stromquelle zu empfangen;
einen Ausgang (114), der konfiguriert ist, um mit einem elektrischen Verbraucher gekoppelt zu sein und um dem elektrischen Verbraucher Ausgangsstrom bereitzustellen;
einen Stromrichter, der zwischen den Eingang und den Ausgang gekoppelt ist; und
einen aktiven Welligkeitsfilter (110), der mit einem von dem Ausgang und dem Eingang gekoppelt ist, der einen Zwischenkreis umfasst, der mindestens einen Zwischenkreiskondensator (108) aufweist und konfiguriert ist, um eine aufhebende Welligkeitsspannung zu erzeugen, um einen Welligkeitsstrom aufzuheben, der mit dem Stromrichter assoziiert ist, wobei die aufhebende Welligkeitsspannung gegenphasig zu einer Spannungswelligkeit von dem Stromrichter ist,
**dadurch gekennzeichnet, dass**
der aktive Welligkeitsfilter einen Vollbrückenwechselrichter, einen lokalen Kondensator, der über Schalter des Vollbrückenwechselrichters gekoppelt ist, und einen zusätzlichen Kondensator, der mit dem Vollbrückenwechselrichter parallelgeschaltet ist, umfasst, wobei eine Anordnung des Vollbrückenwechselrichters und des zusätzlichen Kondensators mit dem Eingang oder mit dem Ausgang in Reihe geschaltet ist.

2. Stromsystem gemäß Anspruch 1, wobei der Stromrichter einen Wechselrichter umfasst und die Stromquelle eine Gleichstrom-Stromquelle umfasst.

3. Stromsystem gemäß Anspruch 1, wobei der Stromrichter einen Gleichrichter umfasst und die Stromquelle eine Wechselstrom-Stromquelle umfasst.

4. Stromsystem gemäß Anspruch 1, das ferner eine Steuereinheit beinhaltet, die mit mindestens dem aktiven Welligkeitsfilter gekoppelt ist und konfiguriert ist, um zu bewirken, dass der aktive Welligkeitsfilter die aufhebende Welligkeitsspannung erzeugt.

5. Ein Verfahren zum Betreiben eines Stromsystems, das einen Eingang (112), der mit einer Stromquelle gekoppelt ist, einen Ausgang (114), der mit mindestens einem elektrischen Verbraucher gekoppelt ist, einen aktiven Welligkeitsfilter (110) und einen Stromrichter, der zwischen den Eingang und den Ausgang gekoppelt ist, aufweist, wobei das Verfahren Folgendes beinhaltet:
Empfangen von Strom von der Stromquelle an dem Eingang;
Wahrnehmen einer Spannungswelligkeit, die von dem Stromrichter erzeugt wird; und
Erzeugen einer aufhebenden Welligkeitsspannung an dem aktiven Welligkeitsfilter, die eine Phase aufweist, die gegenphasig zu der Spannungswelligkeit ist, die von dem Stromrichter erzeugt wird, um die Spannungswelligkeit, die von dem Stromrichter erzeugt wird, aufzuheben, wobei das Erzeugen der aufhebenden Welligkeitsspannung das Steuern einer Spannung von einem lokalen Kondensator, der über Schalter eines Vollbrückenwechselrichters des aktiven Welligkeitsfilters gekoppelt ist und eine Welligkeitsfilterausgangsspannung auf Basis der Spannungswelligkeit bereitstellt, und das Betreiben des Vollbrückenwechselrichters, um die aufhebende Welligkeitsspannung auf Basis der Welligkeitsfilterausgangsspannung bereitzustellen, umfasst, wobei der aktive Welligkeitsfilter einen zusätzlichen Kondensator umfasst, der mit dem Vollbrückenwechselrichter parallelgeschaltet ist, wobei eine Anordnung des Vollbrückenwechselrichters und des zusätzlichen Kondensators mit dem Eingang oder mit dem Ausgang in Reihe geschaltet ist.

6. Verfahren gemäß Anspruch 5, wobei das Wahrnehmen einer Spannungswelligkeit das Extrahieren der Spannungswelligkeit aus einer Spannung, die von dem Stromrichter bereitgestellt wird, umfasst.

## Revendications

1. Un système de puissance comprenant :
une entrée (112) configurée pour être couplée à une source de puissance et pour recevoir de la puissance d'entrée provenant de la source de puissance ;
une sortie (114) configurée pour être couplée à une charge et pour fournir de la puissance de sortie à la charge ;
un convertisseur de puissance couplé entre l'entrée et la sortie ; et
un filtre d'ondulation actif (110), couplé soit à la sortie, soit à l'entrée, incluant une liaison CC ayant au moins un condensateur de liaison CC (108) et configuré pour générer une ondulation de tension annulatrice afin d'annuler une ondulation de courant associée au convertisseur de puissance, l'ondulation de tension annulatrice étant en opposition de phase par rapport à une ondulation de tension provenant du convertisseur de puissance,
**caractérisé en ce que**
le filtre d'ondulation actif inclut un onduleur en pont complet, un condensateur local couplé aux bornes d'interrupteurs de l'onduleur en pont complet, et un condensateur supplémentaire couplé en parallèle à l'onduleur en pont complet, un montage de l'onduleur en pont complet et du condensateur supplémentaire étant raccordé en série à l'entrée ou à la sortie.

2. Le système de puissance de la revendication 1, dans lequel le convertisseur de puissance inclut un onduleur et la source de puissance inclut une source de puissance CC.

3. Le système de puissance de la revendication 1, dans lequel le convertisseur de puissance inclut un redresseur et la source de puissance inclut une source de puissance CA.

4. Le système de puissance de la revendication 1, comprenant en outre un dispositif de commande couplé au moins au filtre d'ondulation actif et configuré pour amener le filtre d'ondulation actif à générer l'ondulation de tension annulatrice.

5. Un procédé pour faire fonctionner un système de puissance ayant une entrée (112) couplée à une source de puissance, une sortie (114) couplée à au moins une charge, un filtre d'ondulation actif (110), et un convertisseur de puissance couplé entre l'entrée et la sortie, le procédé comprenant :
la réception de puissance provenant de la source de puissance au niveau de l'entrée ;
la détection d'une ondulation de tension générée par le convertisseur de puissance ; et
la génération d'une ondulation de tension annulatrice au niveau du filtre d'ondulation actif ayant une phase opposée à une phase de l'ondulation de tension générée par le convertisseur de puissance afin d'annuler l'ondulation de tension générée par le convertisseur de puissance, la génération de l'ondulation de tension annulatrice incluant la commande d'une tension provenant d'un condensateur local couplé aux bornes d'interrupteurs d'un onduleur en pont complet du filtre d'ondulation actif et la fourniture d'une tension de sortie de filtre d'ondulation sur la base de l'ondulation de tension, et le fait de faire fonctionner l'onduleur en pont complet afin de fournir l'ondulation de tension annulatrice sur la base de la tension de sortie de filtre d'ondulation, le filtre d'ondulation actif incluant un condensateur supplémentaire couplé en parallèle à l'onduleur en pont complet, un montage de l'onduleur en pont complet et du condensateur supplémentaire étant raccordé en série à l'entrée ou à la sortie.

6. Le procédé selon la revendication 5, dans lequel la détection d'une ondulation de tension inclut l'extraction de l'ondulation de tension d'une tension fournie par le convertisseur de puissance.
